# FASCICULE DE BREVET EUROPEEN

(11) **EP 4 051 909 B1**
(45) Date de publication et mention de la délivrance du brevet: **01.11.2023**
(21) Numéro de dépôt: 20797833.9
(22) Date de dépôt: 13.10.2020
(51) Int. Cl.: F04D 29/66

(54) **SUPPORT DE MOTEUR ET DISPOSITIF DE CHAUFFAGE, DE VENTILATION ET/OU DE CLIMATISATION POUR VÉHICULE AUTOMOBILE**
MOTORTRÄGER UND HEIZUNG-, LÜFTUNG- UND/ODER KLIMATISIERUNGSGERÄT FÜR AUTOMOBILES FAHRZEUG
MOTOR SUPPORT AND HVAC (HEATING, VENTILATING AND/OR AIRCONDITIONING) DEVICE FOR AUTOMOBILE VEHICLE

(30) Priorité: 29.10.2019 FR 1912161
(43) Date de publication de la demande: 07.09.2022
(73) Titulaire: VALEO SYSTEMES THERMIQUES, 78320 Le Mesnil Saint-Denis (FR)
(72) Inventeur: DEGORCE-DUMAS, Clara, 78320 LE MESNIL SAINT DENIS (FR); DE SOUZA, Stéphane, 78320 LE MESNIL SAINT-DENIS (FR); KWACZEWSKI, Clémence, 78320 LE MESNIL SAINT-DENIS (FR)
(74) Mandataire: Valeo Systèmes Thermiques
(86) Numéro de dépôt international: PCT/FR2020/051800
(87) Numéro de publication internationale: WO 2021/084177

(56) Documents cités:
- FR-A1- 3 047 125

## Description

### Domaine technique

La présente invention se rapporte au domaine des dispositifs de chauffage, de ventilation et/ou de climatisation pour véhicules automobiles. L'invention concerne plus particulièrement un support de moteur électrique pour un tel dispositif.

### Technique antérieure

Les véhicules automobiles sont couramment équipés d'un dispositif de chauffage, ventilation et/ou climatisation, qui permet de générer un flux d'air. Un tel dispositif permet également de gérer la température et la distribution au sein de l'habitacle des véhicules du flux d'air créé. Un tel dispositif de chauffage, ventilation et/ou climatisation comporte, entre autres, un ventilateur comprenant une roue de ventilateur entraînée en rotation par un moteur électrique. Le moteur électrique est notamment à commutation électronique, piloté par un module d'alimentation.

Un moteur électrique à commutation électronique, ou moteur à courant continu sans balai (connu également sous la dénomination anglaise de « brushless »), comporte un ensemble rotor et stator, chacun de ces composants étant porteur d'éléments électromagnétiques dont l'interaction génère le déplacement du rotor relativement au stator, et plus loin le déplacement de la roue de ventilateur.

Le moteur électrique est assemblé dans le dispositif de chauffage, ventilation et/ou vibration par l'intermédiaire d'un support de moteur qui comprend une bague intérieure configurée pour accueillir le stator du moteur électrique et une bague extérieure apte à être fixée, directement ou indirectement, à un élément de structure du véhicule.

Un élément de découplage est interposé entre la bague intérieure et la bague extérieure. Cet élément de découplage vise à limiter, voire à empêcher, la transmission de vibrations et/ou de contraintes générées du fait de la rotation du moteur électrique, depuis la bague intérieure, vers la bague extérieure. On réduit ainsi la transmission des vibrations vers le dispositif de chauffage, ventilation et/ou climatisation, qui pourraient être ressenties par les occupants du véhicule.

L'élément de découplage permet un mouvement relatif de la bague intérieure par rapport à la bague extérieure, notamment un basculement et/ou une translation relative de la bague intérieure par rapport à la bague extérieure.

Pour limiter le basculement possible de la bague intérieure par rapport à la bague extérieure, le support de moteur peut comprendre en outre plusieurs doigts saillant qui s'étendent, chacun, en saillie d'une première des deux bagues pour venir loger dans un logement respectif formé dans la deuxième des deux bagues, et d'autre part des moyens de réduction du débattement de chaque doigt saillant à l'intérieur du logement associé.

De façon connue, les moyens de réduction du débattement des doigts saillant peuvent consister en une butée axiale dans chaque logement, formée par un ergot s'étendant depuis une base d'un pion à travers une paroi du logement, lorsque le pion est rapporté sur la deuxième des deux bagues. Chaque pion est fixé à la deuxième des deux bagues, par bouterollage de la base du pion, en deux points distants de l'ergot.

Le basculement de la première bague par rapport à la deuxième bague est ainsi limité du fait que les doigts viennent en butée contre l'ergot associé, dans leur logement respectif.

Le document FR 3 047 125 A1 divulgue un support de moteur correspondant à la fois à la description ci-dessus et au préambule de la revendication 1.

Cependant, il s'est avéré que les efforts répétés d'un doigt saillant sur l'ergot d'un pion peuvent provoquer un matage du pion et, à terme, le détachement du pion de la deuxième bague, notamment lorsque les points de fixation de la base sur la deuxième des deux bagues sont éloignés de l'ergot, de telle sorte que chaque effort d'un doigt saillant sur une butée formée par l'ergot peut provoquer une flexion de la base qui peut à terme la fragiliser.

Le but de la présente invention est de proposer un support de moteur, notamment pour un dispositif de chauffage, ventilation et/ou climatisation d'un véhicule automobile, qui est de réalisation simple et qui permet de réduire les risques de séparation des pions de réduction du débattement des doigts saillant et la deuxième bague, tout en conservant, de préférence, un montage relativement aisé.

### Résumé

À cet effet, l'invention a pour objet un support de moteur, notamment pour groupe moto-ventilateur d'une installation de ventilation pour véhicule, comprenant : deux bagues coaxiales, dont une bague intérieure apte à recevoir un ou plusieurs éléments du moteur et une bague extérieure apte à être fixée sur un boîtier formant élément de structure,
un élément de découplage entre les deux bagues coaxiales, et
un élément de limitation du basculement de la bague intérieure par rapport à la bague extérieure, l'élément de limitation comprenant un doigt qui s'étend en saillie d'une première des deux bagues et est logé dans un logement formé dans la deuxième des deux bagues, au moins une butée axiale étant formée dans le logement pour limiter le déplacement du doigt dans le logement dans la direction de l'axe commun des deux bagues, la au moins une butée axiale comprenant un ergot s'étendant depuis une base d'un pion à travers une paroi du logement lorsque le pion est rapporté sur la deuxième des deux bagues, la base du pion étant fixée à la deuxième bague, l'ergot présentant au moins une saillie apte à venir buter contre la paroi du logement.

Ainsi, la saillie absorbe une partie des efforts qui seraient autrement reçus au niveau de la base du pion, la base étant l'élément du pion qui est fixé au support de moteur. Par conséquent, la tenue mécanique des pions agencés sur le support de moteur est améliorée et les risques de détachement diminués.

Notamment, la solution proposée permet de limiter la flexion de la base du pion en cas d'efforts du doigt sur la butée formée par l'ergot du pion.

De préférence, le support de moteur comporte une ou plusieurs des caractéristiques suivantes, prises seules ou en combinaison :
- la saillie est adaptée à venir en butée sur une première face de la paroi du logement, la base du pion étant en contact avec une deuxième face de la paroi, opposée à la première face de la paroi du logement.
- la deuxième bague présente un trou adapté au passage de l'ergot à travers la paroi du logement, lorsque l'ergot est inséré dans le trou avec la au moins une saillie pivotée par rapport à la position dans laquelle la au moins une saillie est apte à venir buter contre la paroi du logement ;
- la base du pion comporte un premier relief, saillant dans le plan de la base du pion, et la deuxième bague comporte un deuxième relief, saillant selon la direction de l'axe commun des deux bagues, de telle sorte que la coopération des premier et deuxième reliefs limite le pivotement du pion autour d'un axe longitudinal de l'ergot ;
- la au moins une saillie de l'ergot présente une surface plane destinée à venir en butée contre la paroi du logement, la surface plane s'étendant de préférence selon un plan normal à l'axe commun des deux bagues ;
- la au moins une saillie et l'ergot du pion sont rigides, la base du pion étant souple ;
- l'ergot présente deux saillies aptes à venir buter contre la paroi du logement, les deux saillies formant de préférence entre elles un angle supérieur ou égal à 90° et/ou inférieur ou égal à 180° autour d'un axe longitudinal de l'ergot ;
- la au moins une saillie de l'ergot présente :
   o une longueur mesurée selon une direction radiale par rapport à un axe longitudinal de l'ergot supérieure ou égale à 4,90 mm et/ou inférieure ou égale à 5,10 mm ; et/ou
   o une largeur mesurée perpendiculairement à une direction radiale par rapport à un axe longitudinal de l'ergot supérieure ou égale à 1,68 mm et/ou inférieure ou égale à 1,72 mm et/ou
   o une épaisseur mesurée selon un axe longitudinal de l'ergot supérieure ou égale à 1,90 mm et/ou inférieure ou égale à 2 mm ;
- la au moins une saillie de l'ergot présente, dans un plan passant par un axe longitudinal de l'ergot, une section sensiblement trapézoïdale ;
- la base du pion est fixée à la deuxième bague par bouterollage ou rivetage, de préférence en deux points distincts de la base, disposés de part et d'autre d'un axe longitudinal de l'ergot ;
- le support de moteur comprend une deuxième butée axiale dans le logement, la butée axiale formée par l'ergot et la deuxième butée axiale étant disposées de part et d'autre du doigt, la butée axiale formée par l'ergot et la deuxième butée axiale étant de préférence en regard l'une de l'autre ;
- la au moins une butée axiale s'étend selon la direction de l'axe commun des bagues intérieure et extérieure ;
- la au moins une butée axiale s'étend selon une direction sensiblement perpendiculaire à la direction d'allongement du doigt ;
- le doigt a une section transversale en H ;
- l'élément de découplage comporte une bague en matériau élastomère, surmoulée entre la bague intérieure et la bague extérieure ;
- le support de moteur comprend au moins une butée axiale formée par un pion s'étendant depuis une surface intérieure d'une cavité de réception ménagée dans un boîtier constituant un déflecteur d'air ;
- le support de moteur comprend une pluralité de doigts régulièrement répartis angulairement autour de l'axe commun des deux bagues, chaque doigt étant logé dans un logement respectif, comportant deux butées associées à chaque doigt ;
- le support de moteur comprend au moins trois doigts régulièrement répartis angulairement autour de l'axe commun des deux bagues ; et
- le support de moteur comprend autant de pions que de doigts.

Selon un autre aspect, il est décrit un dispositif de ventilateur, en particulier pour installation de ventilation pour véhicule, comportant un moteur électrique, en particulier un moteur électrique sans balai, une roue de ventilateur, entraînée en rotation par le moteur électrique, et un support de moteur tel que décrit ci-avant dans toutes ses combinaisons, le moteur, en particulier le stator du moteur, étant fixé sur la bague intérieure du support de moteur.

Il est encore décrit un dispositif de chauffage, de ventilation et/ou de climatisation pour un véhicule automobile, comportant une roue de ventilateur, un moteur pour entraîner en rotation la roue de ventilateur, et un support de moteur tel que décrit ci-avant dans toutes ses combinaisons, le moteur étant fixé sur la bague intérieure du support de moteur.

### Brève description des dessins

D'autres caractéristiques, détails et avantages ressortiront plus clairement à la lecture de la description donnée ci-après à titre indicatif en relation avec les figures suivantes.
[Fig. 1] est une vue schématique de côté d'un exemple de dispositif de ventilateur pour dispositif de chauffage, de ventilation et/ou de climatisation pour véhicule automobile.

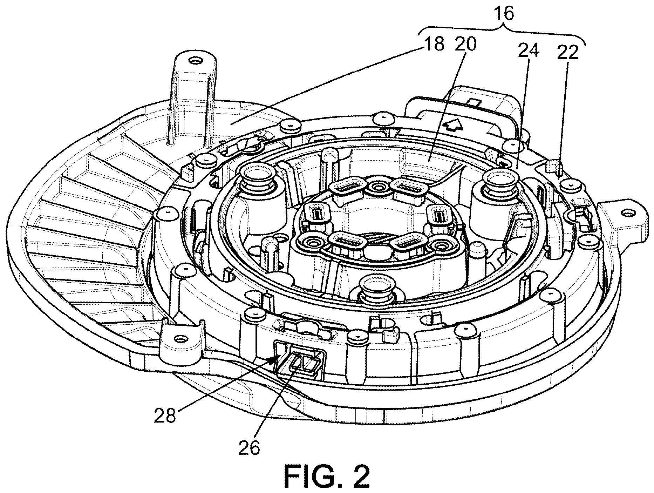

[Fig. 2] est une vue schématique en perspective d'un ensemble formé par le support de moteur et un boîtier du dispositif de ventilateur de la figure 1.

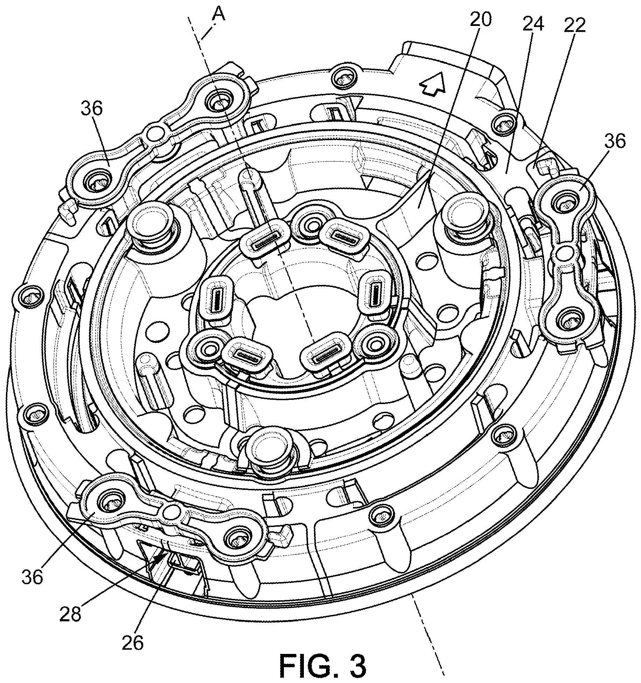

[Fig. 3] est une vue schématique en perspective d'un sous-ensemble du support moteur de la figure 2.
[Fig. 4] est une vue schématique de côté d'un détail du sous-ensemble de la figure 3.
[Fig. 5] est une vue schématique en perspective d'un premier exemple de pion pouvant être mis en oeuvre dans le support de moteur des figures 2 et 3.
[Fig. 6] est une vue schématique de dessus du premier exemple de pion de la figure 5.
[Fig. 7] est une vue schématique de dessus d'un détail du sous-ensemble de la figure 3.
[Fig. 8] est une vue arrachée du support de moteur des figures 2 et 3 montrant l'agencement du pion des figures 5 et 6 dans celui-ci.
[Fig. 9] est une vue schématique de dessus d'un deuxième exemple de pion pouvant être mis en oeuvre dans le support de moteur des figures 2 et 3.
[Fig. 10] est une vue arrachée du support de moteur des figures 2 et 3 montrant l'agencement du pion de la figure 9 dans ce support.

### Description détaillée

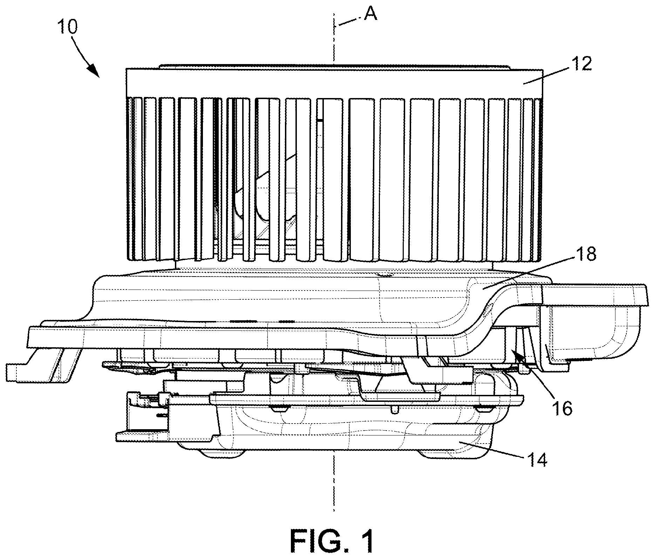

La figure 1 illustre de manière schématique une vue de côté d'un dispositif de ventilateur 10 pour un dispositif de chauffage, de ventilation et/ou de climatisation pour véhicule automobile. Classiquement, un tel dispositif de chauffage, de ventilation et/ou de climatisation pour véhicule automobile comporte, un circuit d'aération, un dispositif de ventilateur 10 pour mettre en mouvement l'air dans le circuit d'aération, et des moyens pour chauffer et/ou des moyens pour rafraîchir le flux d'air mis en mouvement par le dispositif de ventilateur 10.

Comme illustré à la figure 1, le dispositif de ventilateur 10 comporte essentiellement une roue de ventilateur 12 et un moteur électrique, masqué ici par un capot moteur 14, pour entraîner en rotation autour de son axe A, la roue de ventilateur 12. Le moteur électrique est par exemple un moteur sans balais. Le dispositif de ventilateur 10 comporte encore un support de moteur 16 permettant d'assembler le moteur électrique sur un support. En l'espèce, le moteur électrique est relié à un déflecteur 18 du support de moteur 16, le déflecteur 18 formant une partie du circuit d'aération du dispositif de chauffage, de ventilation et/ou de climatisation.

Dans la suite, on décrit plus en détail le support de moteur 16.

Comme visible sur les figures, le support de moteur 16 comporte essentiellement une bague intérieure 20, une bague extérieure 22 et un élément de découplage 24 interposé entre la bague intérieure 20 et la bague extérieure 22. L'élément de découplage 24 vise à limiter la transmission des vibrations depuis l'une des deux bagues 20, 22 vers l'autre des deux bagues 20, 22. L'élément de découplage 24 est ici formé par une bague en matériau élastomère. À titre d'exemple, le matériau élastomère est du SEBS (polystyrène-b-poly(éthylène-butylène)-b-polystyrène). La bague de découplage 24 est par exemple surmoulée sur les bagues intérieure 20 et extérieure 22. La bague de découplage 24 solidarise ainsi les bagues intérieure 20 et extérieure 22. Les bagues intérieure 20, extérieure 22 et de découplage 24 sont coaxiales, d'axe commun l'axe de rotation A de la roue de ventilateur 12.

L'ensemble formé par les bagues intérieure 20, extérieure 22 et de découplage 24, est reçu dans une cavité du déflecteur 18. La bague intérieure 20 est rendue solidaire du stator (ici non visible) du moteur. La bague extérieure 22 est ici fixée au déflecteur 18. Une couche de matériau élastomère peut être interposée entre la bague extérieure 22 et le déflecteur 18.

Selon l'exemple représenté aux figures, la bague intérieure 20 a une pluralité de doigts 26. Les doigts 26 s'étendent radialement vers l'extérieur, depuis la surface extérieure de la bague intérieure 20. En l'espèce, chaque doigt 26 a une section en H, comprenant deux surfaces sensiblement planes 26₁, 26₂ reliées entre elles par une âme 26₃. Les surfaces planes 26₁, 26₂ sont ici normales à la direction de l'axe A commun aux bagues 20, 22, 24. Chaque surface plane 26₁, 26₂ est ici recouverte d'une couche 27₁, 27₂ de matériau élastomère.

Dans l'exemple illustré, la bague intérieure 20 a trois doigts 26. Les doigts 26 sont de préférence régulièrement répartis angulairement autour de l'axe A de la bague intérieure 20.

La bague extérieure 22 comprend quant à elle une pluralité de logements 28. Chaque logement 28 est adapté à recevoir un doigt 26 respectif. Les logements 28 sont ainsi débouchant au moins sur la surface radialement interne de la bague extérieure 22. En l'espèce, les logements 28 sont traversant, débouchant sur la surface radialement interne de la bague extérieure 22 et sur la surface radialement externe de la bague extérieure 22. Les logements 28 sont de préférence régulièrement répartis angulairement autour de l'axe A de la bague extérieure 22.

La réception des doigts 26 dans les logements 28 permet de limiter le basculement relatif possible de la bague intérieure 20 par rapport à la bague extérieure 22. Par basculement, on entend ici tout mouvement d'une des bagues 20, 22 par rapport à l'autre 20, 22, en dehors du plan médian commun des bagues 20, 22, normal à la direction de l'axe A commun aux deux bagues 20, 22.

Dans l'exemple illustré, les logements 28 ont des dimensions telles, qu'un jeu existe entre les parois de chaque logement 28 et le doigt 26 qui y est reçu. Notamment, un jeu existe dans la direction orthoradiale. Les parois de chaque logement 28 sont ici recouvertes de matériau élastomère. De manière préférée, la couche d'élastomère 30 qui recouvre les parois de chaque logement 28 est venue de matière avec la bague de découplage 24.

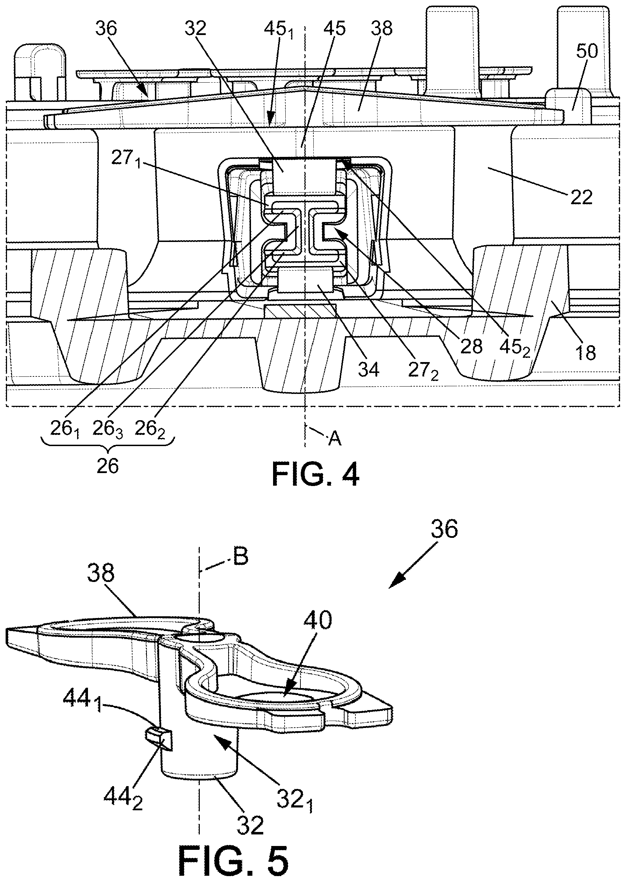

Comme cela est plus particulièrement visible sur la figure 4, dans chaque logement 28, le doigt 26 coopère avec deux butées axiales 32, 34 pour limiter encore le déplacement axial du doigt 26 dans le logement 28. Ici, les deux butées axiales 32, 34 font saillies des parois du logement 28. Par butée axiale, on entend ici une butée limitant le déplacement selon la direction de l'axe A commun des bagues 20, 22, 24. Les deux butées axiales 32, 34 sont ici en regard l'une de l'autre. En d'autres termes, les deux butées axiales 32, 34 sont sensiblement alignées selon une direction parallèle à l'axe A commun des bagues 20, 22, 24.

Dans l'exemple illustré, du matériau élastomère de l'une des couches 27₁, 27₂ est en contact entre l'une des butées axiales 32, 34 et l'une des surfaces planes 26₁, 26₂ du doigt 26. On limite ainsi le débattement possible du doigt 26 dans le logement 28, selon la direction axiale A. Par conséquent, les mouvements relatifs possibles des deux bagues 20, 22 sont aussi limités.

Le matériau élastomère des couches 27₁, 27₂ peut avantageusement être surmoulé sur les surfaces 26₁, 26₂ des doigts 26, en particulier concomitamment au surmoulage de la bague de découplage 24. Le matériau élastomère est ainsi maintenu en position par rapport aux doigts 26. Le montage de la bague intérieure 20 par rapport à la bague extérieure 22 s'en trouve également facilité.

De préférence, les épaisseurs des couches 27₁, 27₂ sont avantageusement égales. Ainsi, un centrage des doigts 26 entre les deux butées axiales 32, 34 est possible.

La première butée axiale est ici formée par un ergot 32 d'un pion 36. Le pion 36 comporte également une base 38, sensiblement plane, depuis laquelle l'ergot 32 s'étend selon un axe B destiné à être parallèle à l'axe A commun des bagues 20, 22, 24, quand le pion 36 est fixé sur la bague extérieure 22. La base 38 présente ici deux ouvertures 40. Les deux ouvertures 40 sont disposées sur la base 38, de part et d'autre de l'axe longitudinal B de l'ergot 32. La base 38 est fixée sur la bague extérieure 22 au niveau des deux ouvertures 40. De préférence, la base 38 est fixée sur la bague extérieure 22 par bouterollage ou rivetage, à travers les deux ouvertures 40.

La base 38 comporte en outre un relief 48, s'étendant sensiblement dans le plan de la base 38, à une extrémité de la base 38.

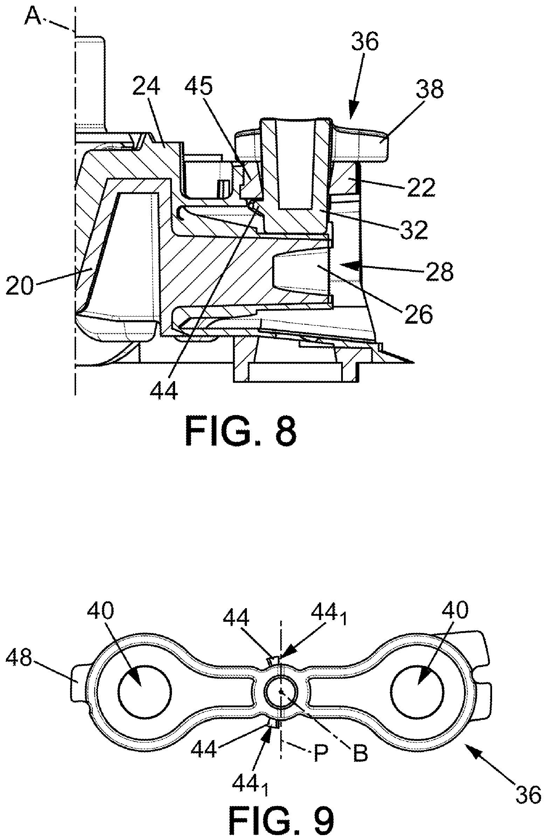

L'ergot 32 est ici sensiblement cylindrique, de section circulaire. L'ergot 32 présente une saillie 44 s'étendant radialement depuis une surface latérale 32₁ de l'ergot 32. Comme illustré à la figure 8, une fois le pion 36 montée sur la deuxième bague 22, la saillie 44 s'étend dans le logement 28. Ainsi, la base 38 du pion 36 et la saillie 44 sont séparées, en position montée du pion 36 sur la deuxième bague 22, par une paroi 45 formée par la deuxième bague 22. La paroi 45 délimite partiellement le logement 28. La base 38 est en contact avec une première face 45₁ de la paroi, dite face externe 45₁. La saillie 44 est apte à venir en butée contre la paroi 45 du logement 28, sur une face 45₂ de la paroi 45, dite face interne 45₂, opposée à la face externe 45₁.

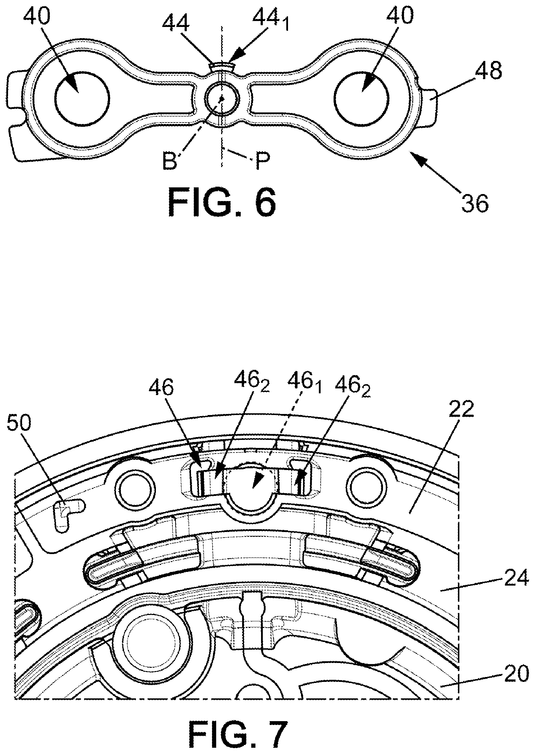

Dans l'exemple des figures 5 et 6, la saillie 44 de l'ergot 32 présente, dans un plan P incluant l'axe longitudinal B de l'ergot 32, une section de forme sensiblement trapézoïdale. La section de la saillie 44 peut être sensiblement constante dans tout plan passant par l'axe longitudinal B de l'ergot, traversant la saillie 44. Ainsi, les parois latérales 44₂ de la saillie peuvent avoir une forme sensiblement trapézoïdale.

La saillie 44 présente par exemple une première surface plane 44₁. La surface plane 44₁ s'étend ici selon un plan normal à l'axe longitudinal B de l'ergot. Avantageusement, la surface plane 44₁ est ainsi parallèle à la face interne 45₂ de la paroi 45. La saillie 44 présente une longueur, mesurée selon une direction radiale par rapport à l'axe longitudinal B de l'ergot 32, supérieure ou égale à 4,90 mm et/ou inférieure ou égale à 5,10 mm. La longueur de la saillie 44 est par exemple mesurée sur la surface 44₁. Par ailleurs, la saillie 44 présente une largeur mesurée perpendiculairement à la direction radiale par rapport à l'axe longitudinal B de l'ergot 32 supérieure ou égale à 1,68 mm et/ou inférieure ou égale à 1,72 mm. La largeur de la saillie 44 peut par exemple être mesurée sur la surface plane 44₁.

La surface plane 44₁ est par exemple sensiblement annulaire.

La saillie 44 peut encore présenter une épaisseur, mesurée parallèlement à l'axe longitudinal B de l'ergot 32, supérieure ou égale à 1,90 mm et/ou inférieure ou égale à 2 mm. L'épaisseur de la saillie 44 peut par exemple être mesurée sur une surface latérale 44₂ de la saillie 44, notamment à la base de la saillie 44 là où la saillie 44 est reliée à l'ergot 32.

Comme illustré sur la figure 7, la bague extérieure 22 présente une pluralité de trous 46. Chaque trou 46 débouche dans un logement 28 associé. Chaque trou 46 traverse une paroi 45 d'un logement 28 associé. Chaque trou 46 a ici une section transversale, dans un plan normal à la direction de l'axe A commun des deux bagues 20, 22, présentant une première portion 46₁ sensiblement circulaire. La portion circulaire 46₁ est de diamètre égal au diamètre de l'ergot 32. La section transversale de chaque trou 46 comporte également une deuxième portion 46₂ allongée, contigüe à la première portion 46₁, s'étendant selon une direction orthoradiale par rapport à l'axe commun A. La deuxième portion 46₂ peut s'étendre, comme illustrée à la figure 7, de part et d'autre de la première portion 46₁. La deuxième portion 46₂ présente une largeur, mesurée selon une direction radiale par rapport à l'axe commun A, inférieure au diamètre de la première portion 46₁.

La bague extérieure 22 comporte en outre un relief 50 au voisinage de chaque trou 46. Chaque relief 50 fait saillie dans une direction parallèle à l'axe commun A des bagues 20, 22. En l'espèce, chaque relief 50 est sensiblement cylindrique, de section transversale en L.

L'ergot 32 est inséré dans la paroi 45 du logement 28 à travers le trou 46. Pour permettre l'insertion de l'ergot 32, le pion 36 est positionné, notamment est pivoté autour de l'axe B de l'ergot 32 par rapport à la position reçu dans le logement 28, de telle sorte que la saillie 44 s'étende sensiblement selon une direction orthoradiale de la bague extérieure 22. Ainsi, la partie cylindrique de l'ergot 32 passe par la portion circulaire 46₁ du trou 46 et la saillie 44 traverse la portion allongée 46₂ du trou 46. Une fois que la saillie 44 a traversé le trou 46 et est reçue dans le logement 28, on pivote le pion 36 sensiblement autour de l'axe longitudinal B de l'ergot 32, jusqu'à placer la saillie 44 en vis-à-vis de la paroi 45 du logement. En d'autres termes, pour permettre l'insertion de l'ergot 32, on pivote le pion 36 de telle sorte que la saillie 44 se trouve dans une position pivotée par rapport à la position dans laquelle la saillie 44 est apte à venir buter contre la paroi 45 du logement 28. En l'espèce, la saillie 44 peut être pivotée à 90° par rapport à la position dans laquelle la saillie 44 est apte à venir en butée contre la paroi 45 du logement 28, pour permettre l'insertion de l'ergot 32 dans le trou 46.

De manière avantageuse, la saillie 44 est reçue dans le logement 28 sensiblement lorsque la base 38 du pion 36 est au contact de la face externe 45₁ de la paroi 45. En d'autres termes, la distance, mesurée selon l'axe longitudinale B de l'ergot 32, entre la saillie 44 et la base 38 est sensiblement égale à l'épaisseur, mesurée selon la direction de l'axe commun A, de la paroi 45. Ainsi, après pivotement du pion 36 autour de l'axe longitudinal B de l'ergot 32 jusqu'à atteindre la position dans laquelle la saillie 44 est apte à venir buter contre la paroi 45 du logement 28, la base 38 est en contact avec la surface externe 45₁ de la paroi et la saillie 44 est en contact avec la surface interne 45₂ de la paroi 45.

De manière avantageuse, la position dans laquelle la saillie 44 est apte à venir buter contre la paroi 45 du logement 28 est atteinte, par rotation du pion 36 dont l'ergot 32 est reçu dans le trou 46, lorsque le relief 48 de la base 38 entre en contact avec le relief 50 sur la bague extérieure 22. La coopération entre le relief 48 de la base 38 et le relief 50 sur la bague extérieure 22 limite donc le pivotement du pion 36 autour de l'axe longitudinal B de l'ergot 32, permettant ainsi de placer la saillie 44 dans la position angulaire dans laquelle elle est apte à venir buter contre la paroi 45 du logement 28.

Comme illustré sur la figure 8, dans cette position, la saillie 44 s'étend selon une direction sensiblement parallèle la direction d'allongement du doigt 26.

Ici, la saillie 44 et l'ergot 32 sont rigides par rapport à la base 38, qui est souple. La saillie 44 permet de créer un encastrement entre le pion 36 et la bague extérieure 22. Ainsi, les efforts exercés par le doigt 26 sur l'ergot 32, en cas de basculement trop important entre la bague intérieure 20 et la bague extérieure 22, sont répartis au niveau de la saillie 44, d'une part, et au niveau des points de fixations de la base 38 sur la deuxième bague 22, d'autre part. Une meilleure répartition de ces efforts reçus permet ainsi de limiter les risques de détachement de la base 38, fixée sur la bague extérieure 22.

La figure 9 illustre un deuxième exemple de pion 36 pouvant être mis en oeuvre dans le dispositif 10 de la figure 1.

Selon ce deuxième exemple, l'ergot 32 peut présenter deux saillies 44. Chaque saillie 44 est apte à venir buter contre la face interne 45₂ de la paroi 45 du logement 28, opposée à la face externe 45₁. Comme montré sur la figure 9, les deux saillies 44 s'étendent ici radialement à partir de la surface latérale de l'ergot 32. Les deux saillies 44 forment de préférence entre elles un angle supérieur ou égal à 90° et/ou inférieur ou égal à 180° autour d'un axe longitudinal B de l'ergot 32.

Il est à noter ici que les deux saillies 44 sont ici sensiblement de la même longueur et/ou de la même épaisseur que la saillie 44 du premier exemple. Cependant, chaque saillie 44 peut présenter une largeur sensiblement égale à la moitié de la largeur de la saillie 44 du premier exemple. Ainsi, l'aire des deux surfaces 44₁ des saillies 44 du deuxième exemple, destinées à venir en butée contre la face interne 45₂ de la paroi 45 du logement 28, est sensiblement égale à l'aire de la surface 44₁ de la saillie 44 du premier exemple.

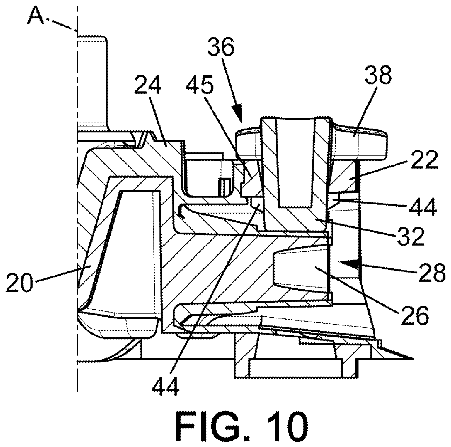

La présence de deux saillies 44₁ écartées angulairement permet de répartir les points de pression sur la face interne 45₂ de la paroi 45. Par exemple, comme illustré sur la figure 10, une première surface plane 44₁ de la saillie 44 vient en butée sur la paroi 45 en un point situé radialement vers l'intérieur par rapport à l'ergot 32, et une deuxième surface plane 44₁ vient en butée sur la paroi 45 en un point situé radialement vers l'extérieur par rapport à l'ergot 32. Ici, par « un point radialement vers l'intérieur par rapport à l'ergot 32 », respectivement « radialement vers l'extérieur », on entend un point situé plus près, respectivement plus loin, de l'axe commun A des bagues intérieure et extérieure 20, 22, que l'ergot 32.

Pour faciliter le montage du pion 36, il est intéressant ici que la portion allongée 46₂ de la section du trou 46 s'étendent de part et d'autre de la portion circulaire 46₁ permettant la traversée de la portion cylindrique de l'ergot 32.

La présente divulgation ne se limite pas aux exemples de réalisation décrits en regard des figures, mais est au contraire susceptible de nombreuses variantes accessibles à l'homme du métier.

## Revendications

1. Support de moteur (16), notamment pour groupe moto-ventilateur d'une installation de ventilation pour véhicule, comprenant :
deux bagues coaxiales, dont une bague intérieure (20) apte à recevoir un ou plusieurs éléments du moteur et une bague extérieure (22) apte à être fixée sur un boîtier formant élément de structure,
un élément de découplage (24) entre les deux bagues coaxiales (20 ; 22), et
un élément de limitation du basculement de la bague intérieure par rapport à la bague extérieure, l'élément de limitation comprenant un doigt (26) qui s'étend en saillie d'une première des deux bagues (20 ; 22) et est logé dans un logement (28) formé dans la deuxième des deux bagues (20 ; 22), au moins une butée axiale étant formée dans le logement (28) pour limiter le déplacement du doigt (26) dans le logement (28) dans la direction de l'axe commun (A) des deux bagues (20 ; 22), la au moins une butée axiale comprenant un ergot (32) s'étendant depuis une base (38) d'un pion (36) à travers une paroi (45) du logement lorsque le pion (36) est rapporté sur la deuxième des deux bagues (20 ; 22), la base (38) du pion (36) étant fixée à la deuxième bague,
le support de moteur étant **caractérisé en ce que**
l'ergot (32) présente au moins une saillie (44) apte à venir buter contre la paroi (45) du logement (28).

2. Support de moteur (16) selon la revendication précédente, dans lequel la deuxième bague présente un trou (46) adapté au passage de l'ergot (32) à travers la paroi (45) du logement (28), lorsque l'ergot (32) est inséré dans le trou (46) avec la au moins une saillie (44) pivotée par rapport à la position dans laquelle la au moins une saillie (44) est apte à venir buter contre la paroi (45) du logement (28).

3. Support de moteur (16) selon la revendication 1 ou 2, dans lequel la base (38) du pion (36) comporte un premier relief (48), saillant dans le plan de la base (38) du pion (36), et la deuxième bague comporte un deuxième relief (50), saillant selon la direction de l'axe commun (A) des deux bagues (20 ; 22), de telle sorte que la coopération des premier et deuxième reliefs (48 ; 50) limite le pivotement du pion (36) autour d'un axe longitudinal (B) de l'ergot (32).

4. Support de moteur (16) selon l'une quelconque des revendications précédentes, dans lequel la au moins une saillie (44) de l'ergot (32) présente une surface plane (44₁) destinée à venir en butée contre la paroi (45) du logement, la surface plane (44₁) s'étendant de préférence selon un plan normal à l'axe commun (A) des deux bagues (20 ; 22).

5. Support de moteur (16) selon l'une quelconque des revendications précédentes, dans lequel l'ergot (32) présente deux saillies (44) aptes à venir buter contre la paroi (45) du logement (28), les deux saillies (44) formant de préférence entre elles un angle supérieur ou égal à 90° et/ou inférieur ou égal à 180° autour d'un axe longitudinal (B) de l'ergot.

6. Support de moteur (16) selon l'une quelconque des revendications précédentes, dans lequel la au moins une saillie (44) de l'ergot (32) présente :
- une longueur mesurée selon une direction radiale par rapport à un axe longitudinal (B) de l'ergot (32) supérieure ou égale à 4,90 mm et/ou inférieure ou égale à 5,10 mm et/ou
- une largeur mesurée perpendiculairement à une direction radiale par rapport à un axe longitudinal (B) de l'ergot (32) supérieure ou égale à 1,68 mm et/ou inférieure ou égale à 1,72 mm et/ou
- une épaisseur mesurée selon un axe longitudinal (B) de l'ergot (32) supérieure ou égale à 1,90 mm et/ou inférieure ou égale à 2 mm.

7. Support de moteur (16) selon l'une quelconque des revendications précédentes, dans lequel la au moins une saillie (44) de l'ergot (32) présente, dans un plan (P) passant par un axe longitudinal (B) de l'ergot (32), une section sensiblement trapézoïdale.

8. Support de moteur (16) selon l'une quelconque des revendications précédentes, dans lequel la base (38) du pion (36) est fixée à la deuxième bague par bouterollage ou rivetage, de préférence en deux points distincts de la base (38), disposés de part et d'autre d'un axe longitudinal (B) de l'ergot (32).

9. Dispositif de ventilateur (10), en particulier pour installation de ventilation pour véhicule, comportant un moteur électrique, en particulier un moteur électrique sans balai, une roue de ventilateur (12), entraînée en rotation par le moteur électrique, et un support de moteur (16) selon l'une quelconque des revendications précédentes, le moteur, en particulier le stator du moteur, étant fixé sur la bague intérieure (20) du support de moteur (16).

10. Dispositif de chauffage, de ventilation et/ou de climatisation pour un véhicule automobile, comportant une roue de ventilateur (12), un moteur pour entraîner en rotation la roue de ventilateur (12), et un support de moteur (16) selon l'une quelconque des revendications 1 à 8, le moteur étant fixé sur la bague intérieure (20) du support de moteur (16).

## Patentansprüche

1. Motorträger (16), insbesondere für einen Lüftersatz einer Lüftungsanlage für ein Fahrzeug, umfassend:
zwei koaxiale Ringe, von denen ein innerer Ring (20) dazu in der Lage ist, ein oder mehrere Elemente des Motors aufzunehmen, und ein äußerer Ring (22) dazu in der Lage ist, an einem Gehäuse befestigt zu sein, das ein Strukturelement bildet,
ein Entkopplungselement (24) zwischen den beiden koaxialen Ringen (20; 22) und
ein Element zur Begrenzung des Kippens des inneren Rings in Bezug auf den äußeren Ring, wobei das Begrenzungselement einen Finger (26) umfasst, der sich von einem ersten der beiden Ringe (20; 22) vorspringend erstreckt und in einer Aufnahme (28) aufgenommen ist, die im zweiten der beiden Ringe (20; 22) ausgebildet ist, wobei in der Aufnahme (28) mindestens ein axialer Anschlag ausgebildet ist, um die Verschiebung des Fingers (26) in der Aufnahme (28) in Richtung der gemeinsamen Achse (A) der beiden Ringe (20; 22) zu begrenzen, wobei der mindestens eine axiale Anschlag einen Stift (32) umfasst, der sich von einer Basis (38) eines Zapfens (36) durch eine Wand (45) der Aufnahme erstreckt, wenn der Zapfen (36) am zweiten der beiden Ringe (20; 22) angeordnet ist, wobei die Basis (38) des Zapfens (36) am zweiten Ring befestigt ist,
wobei der Motorträger **dadurch gekennzeichnet ist, dass** der Stift (32) mindestens einen Vorsprung (44) aufweist, der an der Wand (45) der Aufnahme (28) zur Anlage kommen kann.

2. Motorträger (16) nach dem vorangehenden Anspruch, wobei der zweite Ring ein Loch (46) aufweist, das für den Durchgang des Stifts (32) durch die Wand (45) der Aufnahme (28) geeignet ist, wenn der Stift (32) in das Loch (46) eingeführt wird, wobei der mindestens eine Vorsprung (44) in Bezug auf die Position gedreht ist, in der der mindestens eine Vorsprung (44) an der Wand (45) der Aufnahme (28) zur Anlage kommen kann.

3. Motorträger (16) nach Anspruch 1 oder 2, wobei die Basis (38) des Zapfens (36) ein erstes Relief (48) aufweist, das in der Ebene der Basis (38) des Zapfens (36) vorspringt, und wobei der zweite Ring ein zweites Relief (50) aufweist, das in der Richtung der gemeinsamen Achse (A) der beiden Ringe (20; 22) vorspringt, so dass das Zusammenwirken des ersten und des zweiten Reliefs (48; 50) das Drehen des Zapfens (36) um eine Längsachse (B) des Stifts (32) begrenzt.

4. Motorträger (16) nach einem der vorangehenden Ansprüche, wobei der mindestens eine Vorsprung (44) des Stifts (32) eine ebene Fläche (44₁) aufweist, die dazu bestimmt ist, an der Wand (45) der Aufnahme zur Anlage zu kommen, wobei sich die ebene Fläche (44₁) vorzugsweise in einer zur gemeinsamen Achse (A) der beiden Ringe (20; 22) senkrechten Ebene erstreckt.

5. Motorträger (16) nach einem der vorangehenden Ansprüche, wobei der Stift (32) zwei Vorsprünge (44) aufweist, die an der Wand (45) der Aufnahme (28) zur Anlage kommen können, wobei die beiden Vorsprünge (44) vorzugsweise untereinander einen Winkel von 90° oder mehr und/oder 180° oder weniger um eine Längsachse (B) des Stifts bilden.

6. Motorträger (16) nach einem der vorangehenden Ansprüche, wobei der mindestens eine Vorsprung (44) des Stifts (32) Folgendes aufweist:
- eine Länge, gemessen in einer radialen Richtung in Bezug auf eine Längsachse (B) des Stifts (32), von 4,90 mm oder mehr und/oder 5,10 mm oder weniger und/oder
- eine Breite, gemessen senkrecht zu einer radialen Richtung in Bezug auf eine Längsachse (B) des Stifts (32), von 1,68 mm oder mehr und/oder 1,72 mm oder weniger und/oder
- eine Dicke, gemessen entlang einer Längsachse (B) des Stifts (32), von 1,90 mm oder mehr und/oder 2 mm oder weniger.

7. Motorträger (16) nach einem der vorangehenden Ansprüche, wobei der mindestens eine Vorsprung (44) des Stifts (32) in einer durch eine Längsachse (B) des Stifts (32) verlaufenden Ebene (P) einen im Wesentlichen trapezförmigen Querschnitt aufweist.

8. Motorträger (16) nach einem der vorangehenden Ansprüche, wobei die Basis (38) des Zapfens (36) durch Stauchen oder Nieten befestigt ist, vorzugsweise an zwei verschiedenen Punkten der Basis (38), die auf beiden Seiten einer Längsachse (B) des Stifts (32) angeordnet sind.

9. Lüftervorrichtung (10), insbesondere für eine Lüftungsanlage für ein Fahrzeug, mit einem Elektromotor, insbesondere einem bürstenlosen Elektromotor, einem Lüfterrad (12), das durch den Elektromotor drehend angetrieben wird, und einem Motorträger (16) nach einem der vorangehenden Ansprüche, wobei der Motor, insbesondere der Stator des Motors, am inneren Ring (20) des Motorträgers (16) befestigt ist.

10. Heizungs-, Lüftungs- und/oder Klimatisierungsvorrichtung für ein Kraftfahrzeug, mit einem Lüfterrad (12), einem Motor zum drehenden Antreiben des Lüfterrads (12) und einem Motorträger (16) nach einem der Ansprüche 1 bis 8, wobei der Motor am inneren Ring (20) des Motorträgers (16) befestigt ist.

## Claims

1. Motor support (16), in particular for a motorized fan unit of a ventilation installation for a vehicle, comprising:
two coaxial rings, including an inner ring (20) capable of receiving one or more motor elements and an outer ring (22) capable of being fixed to a housing forming a structural element,
a decoupling element (24) between the two coaxial rings (20; 22), and
an element for limiting the tilting of the inner ring relative to the outer ring, the limiting element comprising a finger (26) which projects from a first of the two rings (20; 22) and is housed in a receptacle (28) formed in the second of the two rings (20; 22), at least one axial end-stop being formed in the receptacle (28) to limit the movement of the finger (26) in the receptacle (28) in the direction of the common axis (A) of the two rings (20; 22), the at least one axial end-stop comprising a spigot (32) extending from a base (38) of a peg (36) through a wall (45) of the receptacle when the peg (36) is attached to the second of the two rings (20; 22), the base (38) of the peg (36) being fixed to the second ring,
the motor support being **characterized in that**
the spigot (32) has at least one projection (44) capable of abutting against the wall (45) of the receptacle (28).

2. Motor support (16) according to the preceding claim, in which the second ring has a hole (46) suitable for the passage of the spigot (32) through the wall (45) of the receptacle (28), when the spigot (32) is inserted into the hole (46) with the at least one projection (44) pivoted relative to the position in which the at least one projection (44) is able to abut against the wall (45) of the receptacle (28).

3. Motor support (16) according to Claim 1 or 2, in which the base (38) of the peg (36) comprises a first relief (48), projecting in the plane of the base (38) of the peg (36), and the second ring comprises a second relief (50), projecting in the direction of the common axis (A) of the two rings (20; 22), such that the cooperation of the first and second reliefs (48; 50) limits the pivoting of the peg (36) around a longitudinal axis (B) of the spigot (32).

4. Motor support (16) according to any one of the preceding claims, in which the at least one projection (44) of the spigot (32) has a planar surface (44₁) intended to come into abutment against the wall (45) of the receptacle, the planar surface (44₁) preferably extending in a plane normal to the common axis (A) of the two rings (20; 22).

5. Motor support (16) according to any one of the preceding claims, in which the spigot (32) has two projections (44) capable of abutting against the wall (45) of the receptacle (28), the two projections (44) preferably forming between them an angle greater than or equal to 90° and/or less than or equal to 180° around a longitudinal axis (B) of the spigot.

6. Motor support (16) according to any one of the preceding claims, in which the at least one projection (44) of the spigot (32) has:
- a length measured in a radial direction with respect to a longitudinal axis (B) of the spigot (32) greater than or equal to 4.90 mm and/or less than or equal to 5.10 mm and/or
- a width measured perpendicular to a radial direction with respect to a longitudinal axis (B) of the spigot (32) greater than or equal to 1.68 mm and/or less than or equal to 1.72 mm and/or
- a thickness measured along a longitudinal axis (B) of the spigot (32) greater than or equal to 1.90 mm and/or less than or equal to 2 mm.

7. Motor support (16) according to any one of the preceding claims, in which the at least one projection (44) of the spigot (32) has, in a plane (P) passing through a longitudinal axis (B) of the spigot (32), a substantially trapezoidal cross section.

8. Motor support (16) according to any one of the preceding claims, in which the base (38) of the peg (36) is fixed to the second ring by rivet heading or riveting, preferably at two distinct points of the base (38), arranged on either side of a longitudinal axis (B) of the spigot (32).

9. Fan device (10), in particular for a ventilation installation for a vehicle, comprising an electric motor, in particular a brushless electric motor, a fan impeller (12), rotationally driven by the electric motor, and a motor support (16) according to any one of the preceding claims, the motor, in particular the stator of the motor, being fixed to the inner ring (20) of the motor support (16).

10. Heating, ventilation and/or air-conditioning device for a motor vehicle, comprising a fan impeller (12), a motor for rotating the fan impeller (12), and a motor support (16) according to any one of Claims 1 to 8, the motor being fixed to the inner ring (20) of the motor support (16).
